# EUROPEAN PATENT APPLICATION

(11) **EP 4 756 900 A1**
(43) Date of publication of application: **10.06.2026**
(21) Application number: 25219995.5
(22) Date of filing: 02.12.2025
(51) Int. Cl.: H01M 4/134, H01M 4/36, H01M 4/38, H01M 4/62, H01M 10/0562

(54) **COMPOSITE ELECTRODE ACTIVE MATERIAL, NEGATIVE ELECTRODE LAYER, SECONDARY BATTERY, AND SOLID-STATE BATTERY**

(30) Priority: 06.12.2024 JP 2024213842
(71) Applicant: Toyota Jidosha Kabushiki Kaisha, Toyota-shi, Aichi-ken 471-8571 (JP)
(72) Inventor: NAKAMOTO, Hirofumi, Toyota-shi, Aichi-ken, 471-8571 (JP)
(74) Representative: Winter, Brandl - Partnerschaft mbB

(57) **Abstract**

A composite electrode active material contains granulated bodies that include a resin and primary particles containing silicon element, and contains a solid electrolyte distributed on a surface of the granulated bodies.

## Description

### Technical Field

The present disclosure relates to a composite electrode active material, a negative electrode layer, a secondary battery, and a solid-state battery.

### Background Art

Silicon is attracting attention as a negative electrode active material due to having a high theoretical capacity. A higher energy density can be achieved in a battery when silicon is employed as the negative electrode active material. Japanese Patent Application Laid-Open (JP-A) No. 2021-128857 describes an issue of a greatly increased internal resistance when silicon covered with a solid electrolyte is employed compared to cases in which silicon not covered in a solid electrolyte is employed. Moreover, in order to address this issue, JP-A No. 2021-128857 describes using a negative electrode containing covered particles in which a negative electrode active material containing silicon has been covered with a sulfide solid electrolyte, and composite particles configured from a negative electrode active material and a sulfide solid electrolyte.

Moreover, JP-A No. 2024-034018 discloses active material composite particles resulting from covering granulated bodies containing silicon particles and a solid electrolyte with a resin having carrier ion conductivity. The active material composite particles disclosed in JP-A No. 2024-034018 enable excellent cycling characteristics to be achieved.

### SUMMARY OF INVENTION

### Technical Problem

Although there are examples, as disclosed in the above Patent Documents, in which granulated bodies, which contain particles containing silicon element and a solid electrolyte, are employed as a negative electrode active material, the interfacial adhesion between silicon exposed on the surface and solid electrolyte is poor, and there is an issue in that this leads to a high internal resistance of a battery. An object of the present disclosure is accordingly to provide a composite electrode active material, a negative electrode layer, a secondary battery, and a solid-state battery that are capable of reducing the internal resistance of a battery. Solution to Problem

As a result of diligent investigations to achieve the above object, the present inventors have discovered that good interfacial adhesion can be achieved by distributing a solid electrolyte on a surface of granulated bodies that include primary particles containing silicon element and include a resin, and have accordingly completed the present disclosure. The present disclosure encompasses the following.
<1> A composite electrode active material, comprising: granulated bodies that comprise a resin and primary particles comprising a silicon element; and a solid electrolyte distributed on a surface of the granulated bodies.
<2> The composite electrode active material of <1>, wherein a ratio of a particle size of the solid electrolyte with respect to a particle size of the granulated bodies is not greater than 1.0.
<3> The composite electrode active material of <1>, wherein a ratio of a particle size of the solid electrolyte with respect to a particle size of the granulated bodies is not greater than 0.4.
<4> The composite electrode active material of <1>, wherein a ratio of a particle size of the solid electrolyte with respect to a particle size of the granulated bodies is not greater than 0.05.
<5> The composite electrode active material of any one of <1> to <4>, wherein the solid electrolyte is a sulfide solid electrolyte.
<6> A negative electrode layer, comprising: a negative electrode current collector; and a negative electrode active material layer comprising the composite electrode active material of any one of <1> to <5> arranged on one or both faces of the negative electrode current collector.
<7> The negative electrode layer of <6>, wherein the negative electrode active material layer further comprises a solid electrolyte.
<8> The negative electrode layer of <6> or <7>, wherein the negative electrode active material layer further comprises a conductive auxiliary agent.
<9> A secondary battery, comprising: the negative electrode layer of <6>; a positive electrode layer that comprises a positive electrode current collector and a positive electrode active material layer, comprising a positive electrode active material, arranged on one or both faces of the positive electrode current collector; and an electrolyte layer arranged between the negative electrode layer and the positive electrode layer.
<10> The secondary battery of <9>, wherein the electrolyte layer comprises a separator that insulates the negative electrode layer from the positive electrode layer, and a non-aqueous electrolyte solution.
<11> The secondary battery of <9> or <10>, wherein the negative electrode layer further comprises a solid electrolyte in the negative electrode active material layer.
<12> The secondary battery of any one of <9> to <11>, wherein the negative electrode layer further comprises a conductive auxiliary agent in the negative electrode active material layer.
<13> A solid-state battery, comprising the secondary battery of<9>, wherein the electrolyte layer comprises a solid electrolyte.

A composite electrode active material and negative electrode layer of the present disclosure enable the internal resistance of a battery to be reduced. Moreover, a secondary battery and a solid-state battery of the present disclosure enable a lower internal resistance and have excellent battery performance properties.

### BRIEF DESCRIPTION OF DRAWINGS

Exemplary embodiments of the present disclosure will be described in detail based on the following figure, wherein:

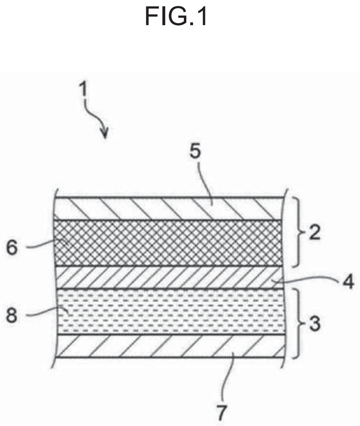

Fig. 1 is a relevant portion cross-section schematically illustrating an embodiment of a secondary battery of the present disclosure.

### DESCRIPTION OF EMBODIMENTS

Description follows regarding exemplary embodiments of the present disclosure. The description merely illustrates examples of exemplary embodiments, and does not limit the range of the present disclosure.

In the present specification a numerical range denoted using "to" indicates a range that includes the respective numerical values proceeding and following "to" as the minimum value and the maximum value thereof.

For a numerical range with a stepwise denotation in the present specification, an upper limit value or a lower limit value for one numerical range may be replaced with an upper limit value or a lower limit value for another stepwise numerical range. Moreover, in numerical ranges listed in the present specification, an upper limit value or a lower limit value of the numerical range may be replaced with a value indicated in an Example.

In the present specification the term "process" not only includes an isolated process, but as long as the intended objective of the process is achieved, the term may also include cases in which another process is unable to be clearly distinguished therefrom.

When an exemplary embodiment is described with reference to the drawings in the present specification, the configuration of the exemplary embodiment is not limited to the configuration illustrated in the drawings. Moreover, the size of members in the drawings is merely schematic, and relative relationships between the sizes of members is not limited thereto.

In the present specification, each component may include plural applicable materials. When reference is made to an amount of each component in a composition in the present exemplary embodiment, then unless explicitly stated otherwise, this means a total amount of plural materials present in the composition when there are plural qualifying materials present for each component in the composition.

A composite electrode active material of the present disclosure includes granulated bodies that include primary particles containing the silicon element and include a resin, and a solid electrolyte distributed on the surface of the granulated bodies. The composite electrode active material of the present disclosure has the solid electrolyte distributed on the surface of the granulated bodies containing a resin, and so is able to form good interfacial adhesion within the composite electrode active material, between the primary particles containing the solid electrolyte and the silicon element. This thereby enables the internal resistance of a battery to be reduced by employing the composite electrode active material of the present disclosure.

### Primary Particles Containing Silicon Element

The primary particles containing the silicon element according to the present disclosure (hereafter referred to as Si particles) preferably include, as a ratio of chemical elements excluding oxygen, silicon element (Si) of at least 60 at%, more preferably at least 80 at%, and even more preferably at least 85 at%. These Si particles may also contain, as well as the silicon (Si), a metal chemical element such as aluminum (Al), chromium (Cr), titanium (Ti), molybdenum (Mo), niobium (Nb), vanadium (V), tungsten (W), and the like.
Moreover, these Si particles may also contain, as well as the silicon element, another chemical element such as an alkali metal chemical element (such as lithium (Li) chemical element, sodium (Na) chemical element, and the like). Examples of the other chemical element also include, other than alkali metal chemical elements such as Li chemical element and the like, calcium (Ca) chemical element, copper (Cu) chemical element, magnesium (Mg) chemical element, strontium (Sr) chemical element, tin (Sn) chemical element, iron (Fe) chemical element, cobalt (Co) chemical element, nickel (Ni) chemical element, phosphorous (P) chemical element, and the like. The Si particles may also include impurities such as oxides and the like. The Si particles may be amorphous or crystalline. The crystalline phase contained in the Si particles is not particularly limited.

A size of the Si particles according to the present disclosure is not particularly limited. An average primary particle size of the Si particles may, for example, be at least 10 nm, at least 30 nm, at least 50 nm, at least 100 nm, or at least 150 nm, and may be not greater than 10 µm, not greater than 5 µm, not greater than 3 µm, not greater than 2 µm, or not greater than 1 µm. Some of the Si particles may be formed into secondary particles. In such cases the average secondary particle size may, for example, be at least 100 nm, at least 1 µm, or at least 2 µm, and may be not greater than 20 µm, not to generate 15 µm, or not greater than 10 µm. The average primary particle size and the average secondary particle size are, for example, able to be appropriately adjusted by appropriately changing manufacturing conditions of the Si particles, or by performing classification processing thereon. Note that for the average primary particle size and the average secondary particle size of the Si particles, a D50 value is employed, which is a particle size (median size) at a cumulative value of 50% in a volume-based particle distribution found using a laser diffraction analysis method.

The Si particles according to the present disclosure may be porous. Expansion of the Si particles during charging can be alleviated by voids in the particles when the Si particles are porous. The form of voids in porous particles is not particularly limited. The porous particles may be particles containing nanoporous silicon. Nanoporous silicon is silicon in which plural pores are present having a pore size of nanometer order (less than 1000 nm, and preferably not more than 100 nm). The porous particles may be particles including pores of not more than 55 nm diameter. Pores having a diameter of not more than 55 nm are not liable to be crushed by being pressed. Namely, porous particles containing pores of not more than 55 nm diameter readily maintain porosity even after being pressed. For example, 1g of porous particles may contain pores of not more than 55 nm diameter at not less than 0.21 cm³/g, not less than 0.22 cm³/g, or not less than 0.23 cm³/g, and at not more than 0.30 cm³/g, at not more than 0.28 cm³/g, or at not more than 0.26 cm³/g. The amount of pores not more than 55 nm diameter contained in the porous particles can be found from a pore size distribution using a DFT method in nitrogen gas adsorption measurement.

In cases in which the Si particles according to the present disclosure are porous, there is no particular limitation to the void ratio. The void ratio may, for example, be at least 1%, at least 5%, at least 10%, or at least 20%, and may be not greater than 80%, not greater than 70%, not greater than 60%, not greater than 50%, not greater than 40%, or not greater than 30%. The void ratio may, for example, be found by observation or the like using a scanning electron microscope (SEM). The number of samples employed therefor is preferably many, and is, for example, at least 100. The void ratio can be taken as being a mean value found from such samples.

### Resin

The resin according to the present disclosure is any resin capable of forming granulated bodies that include Si particles. The resin is not particularly limited, and various resins that are known as secondary battery configuration materials may be employed therefor. Examples of the resin may, for example, be at least one species selected from a butadiene rubber (BR) based binder, a butyl rubber (IIR) based binder, an acrylate-butadiene rubber (ABR) based binder, a styrene-butadiene rubber (SBR) based binder, polyvinylidene fluoride (PVdF) based binder, a polytetrafluoroethylene (PTFE) based binder, a polyimide (PI) based binder, a carboxymethyl cellulose (CMC) based binder, a polyacryl acetate based binder, a polyacrylic acid ester based binder, and the like. In particular, the performance properties of a PVdF based binder are high. A PVdF based binder may be a copolymer including a unit derived from a monomer other than VdF. The polymer may be one species employed singly, or two or more species may be employed in combination.

### Granulated Bodies

The granulated bodies according to the present disclosure include the Si particles and the resin described above. Reference here to a granulated body means a single clump formed with the resin from plural Si particles. The number of Si particles contained in a single granulated body is not particularly limited. The number of Si particles contained in a single granulated body, for example, may be at least 2, at least 5, at least 10, or at least 50, and may be not greater than 1000, not greater than 500, or not greater than 100.

An Si particle content of the granulated bodies according to the present disclosure, taking the overall total of the Si particles and the resin combined as 100% by weight, may be at least 40% by weight, at least 50% by weight, at least 60% by weight, at least 70% by weight, at least 80% by weight, or at least 90% by weight, and may be not greater than 100% by weight or not greater than 98% by weight. By setting the Si particle content in one of these ranges, an electrical potential (charge-discharge potential) for adsorbing and releasing a specific carrier ion (for example, lithium-ions) can be made high, enabling further enhanced secondary battery performance properties to be achieved.

The particle size of the granulated bodies according to the present disclosure is not particularly limited and may, for example, be at least 100 nm, at least 1 µm, or at least 2 µm, and may be not greater than 30 µm, not greater than 25 µm, not greater than 20 µm, not greater than 15 µm, or not greater than 10 µm. The particle size of the granulated bodies is, for example, appropriately adjustable by appropriately changing the average primary particle size of the Si particles, changing the type, amount, or the like of the resin, or changing mixing conditions of the resin and the Si particles. By setting the particle size of the granulated bodies within one of these ranges, an electrical potential (charge-discharge potential) for adsorbing and releasing a specific carrier ion (for example, a lithium-ion) can be made high, enabling further enhanced secondary battery performance properties to be achieved. Note that for the particle size of the granulated bodies, a D50 value may be employed, which is a particle size (median size) at a cumulative value of 50% in a volume-based particle distribution found using a laser diffraction analysis method.

### Solid Electrolyte

The solid electrolyte according to the present disclosure preferably includes at least one solid electrolyte species selected from the solid electrolyte group consisting of a sulfide solid electrolyte, an oxide solid electrolyte, and a halogen solid electrolyte. In particular, the solid electrolyte according to the present disclosure preferably employs at least one solid electrolyte selected from the group consisting of a sulfide solid electrolyte and a halogen solid electrolyte. Sulfide solid electrolytes and halogen solid electrolytes are comparatively soft materials, enabling good adhesion to the primary particles containing the silicon element, and give rise to an enhanced advantageous effect of reducing the internal resistance of a battery. Among these a sulfide solid electrolyte is preferably employed as the solid electrolyte.

As the sulfide solid electrolyte, preferably sulfur (S) is contained as a main component of anionic chemical elements, and furthermore in addition to S, for example, preferably Li chemical element, A chemical element, and S chemical element are contained. The A chemical element is at least one species selected from the group consisting of P, As, Sb, Si, Ge, Sn, B, Al, Ga, and In. The sulfide solid electrolyte may further contain at least one out of O or a halogen chemical element. Examples of the halogen chemical element (X) include, for example, F, Cl, Br, I, and the like. A composition of the sulfide solid electrolyte is not particularly limited and may, for example, be xLi₂S·(100-x)P₂S₅ (70 ≤ x ≤ 80), yLiI·zLiBr·(100-y-z) (xLi₂S·(1-x)P₂S₅) (wherein 0.7 ≤ x ≤ 0.8 and 0 ≤ y ≤ 30, 0 ≤ z ≤ 30).

The sulfide solid electrolyte may include a composition as expressed by following Equation (1).

Li₄₋ₓGe₁₋ₓPₓS₄ (wherein 0 < x < 1) ... Equation (1)

In Equation (1), at least part of the Ge may be substituted by at least one element selected from the group consisting of Sb, Si, Sn, B, Al, Ga, In, Ti, Zr, V, and Nb. Moreover, at least part of the P may be substituted by at least one element selected from the group consisting of Sb, Si, Sn, B, Al, Ga, In, Ti, Zr, V, and Nb. Part of the Li may be substituted by at least one element selected from the group consisting of Na, K, Mg, Ca, and Zn. Part of the S may be substituted by a halogen. The halogen is at least one out of F, Cl, Br, or I.

As the oxide solid electrolyte, preferably oxygen (O) is contained as a main component of the anion chemical element and, for example, Li, Q chemical element (wherein Q represents at least one species selected from the group consisting of Nb, B, Al, Si, P, Ti, Zr, Mo, W, and S), and O may be contained therein. Examples of the oxide solid electrolyte include a garnet type solid electrolyte, a perovskite type solid electrolyte, a NASICON type solid electrolyte, a Li-P-O based solid electrolyte, a Li-B-O based solid electrolyte, and the like. Examples of the garnet type solid electrolyte include, for example, Li₇La₃Zr₂O₁₂, Li₇₋ₓLa₃(Zr₂₋ₓNbₓ)O₁₂ (0 ≤ x ≤ 2), Li₅La₃Nb₂O₁₂, and the like. Examples of the perovskite type solid electrolyte include, for example, (Li, La) TiO₃, (Li, La) NBO₃, (Li, Sr) (Ta, Zr) O₃, and the like. Examples of the NASICON type solid electrolyte include Li (Al, Ti) (PO₄)₃, Li(Al, Ga) (PO₄)₃, and the like. Examples of the Li-P-O based solid electrolytes include Li₃PO₄, LIPON (compounds in which part of the O in Li₃PO₄ has been substituted by N), examples of the Li-B-O based solid electrolytes include Li₃BO₃ and compounds in which part of the O in Li₃BO₃ has been substituted by C.

Suitable examples of the halogen solid electrolyte are solid electrolytes including Li, M, and X (wherein M represents at least 1 element from out of Ti, Al, or Y, and X represents F, Cl, or Br). Specifically preferable are Li_{6-3z}Y_{z}X₆ (wherein X represents Cl or Br, and z satisfies 0 < z < 2) and Li_{6-(4-x)b} (Ti₁₋ₓAlₓ)_{b}F₆ (wherein 0 < x < 1 and 0 < b ≤ 1.5). From out of Li_{6-3z}Y_{z}X₆, Li₃YX₆ (X is Cl or Br) is more preferable from the perspective of having excellent lithium-ion conductivity, and Li₃YCl₆ is even more preferable. Moreover, Li_{6-(4-x)b} (Ti₁₋ₓAlₓ)_{b}F₆ (wherein 0 < x < 1 and 0 < b ≤ 1.5) is, for example, preferably also contained in the solid electrolyte such as the sulfide solid electrolyte or the like from the perspective of suppressing oxidative decomposition of the sulfide solid electrolyte.

In the composite electrode active material of the present disclosure, the solid electrolyte is distributed on the surface of the granulated bodies as described above. A state in which the solid electrolyte has been distributed on the surface of the granulated bodies means a form in which part or all of the surface of the granulated bodies is covered by the solid electrolyte, and encompasses such forms as those in which the solid electrolyte has impacted into the surface of the granulated bodies. For example, the composite electrode active material of the present disclosure may have part of the surface of the granulated bodies covered in the solid electrolyte, and may have another part of the surface where the solid electrolyte has impacted therein.

In the composite electrode active material of the present disclosure, a ratio of a particle size of the solid electrolyte to the particle size of the granulated bodies is preferably not greater than 1.0, and is more preferably less than 1.0. Namely, preferably solid electrolyte is employed that has the same or smaller particle size to the particle size of the granulated bodies. Moreover, in the composite electrode active material of the present disclosure, a ratio of the particle size of the solid electrolyte with respect to the particle size of the granulated bodies may be not greater than 0.9, may be not greater than 0.8, may be not greater than 0.7, may be not greater than 0.6, may be not greater than 0.5, or may be not greater than 0.4. In particular, in the composite electrode active material of the present disclosure, a ratio of the particle size of the solid electrolyte with respect to the particle size of the granulated bodies is preferably not greater than 0.4, is more preferably not greater than 0.1, is even more preferably not greater than 0.05. In the composite electrode active material of the present disclosure, by setting the relationship between the particle size of the granulated bodies and the particle size of the solid electrolyte in one of these ranges, the resistance within the composite electrode active material can be better reduced, and as a result thereof, a secondary battery having a lower internal resistance can be produced.

The particle size of the solid electrolyte in the composite electrode active material of the present disclosure is preferably within one of these ranges with respect to the particle size of the granulated bodies and, for example, may be not less than 100 nm, not less than 1 µm, or not less than 2 µm, and may be not greater than 30 µm, not greater than 25 µm, not greater than 20 µm, not greater than 15 µm, or not greater than 10 µm. Moreover, the particle size of the solid electrolyte, for example, may be not less than 40 nm, not less than 400 nm, or not less than 800 nm, and may be not greater than 12 µm, not greater than 10 µm, not greater than 8 µm, not greater than 6 µm, or not greater than 4 µm. Furthermore, a particle size of the solid electrolyte, for example, may be not less than 10 nm, not less than 100 nm, or not less than 200 nm, and may be not greater than 3 µm, not greater than 2.5 µm, not greater than 2 µm, not greater than 1.5 µm, or not greater than 1 µm. By setting the particle size of the solid electrolyte within one of these ranges, a greater reduction in resistance within the composite electrode active material can be achieved, and as a result thereof, a secondary battery having a lower internal resistance can be produced. Note that for the particle size of the solid electrolyte, a D50 value may be employed, which is a particle size (median size) at a cumulative value of 50% in a volume-based particle distribution found using a laser diffraction analysis method.

Moreover, a solid electrolyte content in the composite electrode active material of the present disclosure is not particularly limited and, taking the granulated bodies as 100% by weight, may be not less than 20% by weight, may be not less than 25% by weight, may be not less than 30% by weight, may be not less than 35% by weight, may be not less than 40% by weight, may be not less than 45% by weight, may be not less than 50% by weight, may be not less than 55% by weight, may be not less than 60% by weight, may be not less than 65% by weight, may be not less than 70% by weight, may be not less than 75% by weight, and may be not less than 80% by weight. Moreover, the content of the solid electrolyte is not particularly limited and, taking the granulated bodies as 100% by weight, may be not less than 80% by weight, may be not less than 75% by weight, may be not less than 70% by weight, may be not less than 65% by weight, may be not less than 60% by weight, may be not less than 55% by weight, may be not less than 50% by weight, may be not less than 45% by weight, may be not less than 40% by weight, may be not less than 35% by weight, may be not less than 30% by weight, may be not less than 25% by weight, and may be not less than 20% by weight. By setting the solid electrolyte content in the composite electrode active material within one of these ranges, a reduction in the resistance within the composite electrode active material can be achieved, and as a result thereof, a secondary battery having a lower internal resistance can be produced.

### Composite Electrode Active Material Manufacturing Method

The composite electrode active material of the present disclosure is not particularly limited thereto but may be produced by a production method including a process in which the granulated bodies are produced, and a process in which the solid electrolyte is distributed on a surface of the produced granulated bodies.

In the process to produce the granulated bodies, the granulated bodies are produced by mixing together the Si particles and the resin described above. Specifically, firstly, the resin is dissolved or dispersed in an organic solvent, and then a slurry is prepared by introducing Si particles therein and mixing. Then afterwards the granulated bodies can be produced by drying the solvent using a method such as, for example, a spray dry method or the like. Note that when preparing the slurry, there are no particular limitations to the mixing means, and mixing may be performed manually using a mortar or the like, or mixing may be performed mechanically using various mixing devices.

Following on therefrom, in the process to distribute the solid electrolyte on the surface of the produced granulated bodies, firstly, the granulated bodies produced as described above and the solid electrolyte are added to an organic solvent, and then mixed by stirring. Then the composite electrode active material of the present disclosure can be produced by removing the organic solvent by drying. The above processes enable manufacture of the composite electrode active material containing the granulated bodies including the Si particles and the resin, and containing the solid electrolyte distributed on the surface of the granulated bodies.

### Negative Electrode Layer

The negative electrode layer of the present disclosure includes a negative electrode current collector, and a negative electrode active material layer that is arranged on one or both faces of the negative electrode current collector and that includes the composite electrode active material of the present disclosure. The negative electrode layer of the present disclosure is able to reduce the internal resistance due to including the composite electrode active material described above. Note that the negative electrode layer of the present disclosure may include arbitrary selected component(s) other than the composite electrode active material described above.

The negative electrode active material layer may include a solid electrolyte as an arbitrary selected component. A solid electrolyte contained in the negative electrode active material layer may be at least one solid electrolyte selected from the solid electrolyte group consisting of a sulfide solid electrolyte, an oxide solid electrolyte, and a halogen solid electrolyte as listed under "Solid Electrolyte" in the description above. Moreover, the solid electrolyte contained in the negative electrode active material layer and the solid electrolyte contained in the composite electrode active material of the present disclosure may be the same as each other, or different to each other.

Moreover, the negative electrode active material layer may contain a conductive auxiliary agent as an arbitrary selected component. Examples of the conductive auxiliary agent include, for example: carbon materials such as vapor-grown carbon fibers (VGCF), acetylene black (AB), Ketjenblack (KB), carbon nano tubes (CNT), carbon nano fibers (CNF), and the like; and metal materials such as nickel, aluminum, stainless steel, and the like. The conductive auxiliary agent may, for example, be in a particle form or fiber form, and the size thereof is not particularly limited. The conductive auxiliary agent may be employed as one species thereof alone, or may be employed as a combination of two or more species thereof.

The negative electrode active material layer can be produced by coating the negative electrode current collector with slurry resulting from mixing the composite electrode active material of the present disclosure together with the arbitrary selected components, such as a solid electrolyte, conductive auxiliary agent, and the like. The slurry referred to here may be prepared by adding the composite electrode active material, and the arbitrary selected components, such as a solid electrolyte, conductive auxiliary agent, and the like, to a solvent in which a material listed under "Resin" as described above is dissolved or dispensed, and then kneading.

Taking the negative electrode active material layer total (solid content total) as 100% by weight, the content of the composite electrode active material in the negative electrode active material layer may, for example, be at least 40% by weight, at least 50% by weight, at least 60% by weight, or at least 70% by weight, and may also be not greater than 100% by weight or not greater than 90% by weight. The shape of the negative electrode active material layer is not particularly limited and may, for example, be a sheet shaped negative electrode active material layer having a substantially flat surface. The thickness of the negative electrode active material layer is not particularly limited and may, for example, be at least 0.1 µm, at least 1 µm, or at least 10 µm, and may also be not greater than 2 mm, not greater than 1 mm, or not greater than 500 µm.

Note that in the negative electrode layer of the present disclosure, the electrolyte contained in the negative electrode active material layer may be a solid electrolyte, may be a liquid electrolyte (electrolyte solution), or may be a combination thereof. In particular, even higher advantageous effects are readily obtained when the negative electrode active material layer contains at least a solid electrolyte as the electrolyte. Namely, the negative electrode layer of the present disclosure preferably contains the composite electrode active material described above, and a solid electrolyte arranged at the periphery thereof. The negative electrode active material layer preferably is one that, from out of solid electrolytes, includes a sulfide solid electrolyte, and furthermore, preferably is one that, from out of these, includes a sulfide solid electrolyte containing Li, S, and P as configuration chemical elements thereof.

Any material that is generally employed as a negative electrode current collector in a battery may be employed as the negative electrode current collector. The negative electrode current collector may be in a foil form, a sheet form, a mesh form, a punched metal form, a foamed body, or the like. The negative electrode current collector may be a metal foil or a metal mesh, or may be a carbon sheet. The negative electrode current collector may be configured from plural sheets of foil or sheet. Examples of a metal configuring the negative electrode current collector include Cu, Ni, Cr, Au, Pt, Ag, Al, Fe, Ti, Zn, Co, stainless steel, and the like. In particular, from the perspective of securing reduction resistance and the perspective of not being liable to alloy with lithium, the negative electrode current collector preferably includes at least one species of metal selected from Cu, Ni, or stainless steel. The negative electrode current collector may include some form of coating layer on the surface thereof, for an objective such as adjusting resistance. Moreover, the negative electrode current collector may be one of the above metals that has been plated or vapor deposited on a metal foil or on a substrate. Moreover, in cases in which the negative electrode current collector is configured from plural sheets of metal foil, some form of layer may be included between the plural sheets of metal foil. The thickness of the negative electrode current collector is not particularly limited. For example, the thickness may be at least 0.1 µm or at least 1 µm, and may also be not greater than 1 mm or not greater than 100 µm.

### Secondary Battery

The secondary battery of the present disclosure includes the negative electrode layer described above, a positive electrode layer including a positive electrode current collector and a positive electrode active material layer including a positive electrode active material that is arranged on one or both faces of the positive electrode current collector, and an electrolyte layer arranged between the negative electrode layer and the positive electrode layer. The secondary battery of the present disclosure includes the negative electrode layer as described above, and so the internal resistance thereof is accordingly able to be made low.

The positive electrode layer in the secondary battery of the present disclosure is not limited to any particular configuration, as long as the positive electrode layer is able to function appropriately as the positive electrode of the secondary battery. The positive electrode active material layer contains at least a positive electrode active material, and may further contain an electrolyte, a conductive auxiliary agent, a binder, and the like as arbitrary selected. The positive electrode active material layer may include other types of additive. Known materials employed as a positive electrode active material of a secondary battery may be employed as the positive electrode active material. Examples of the positive electrode active material include, for example, at least one species selected from various types of lithium containing compounds, elemental sulfur, sulfur compounds, and the like. A lithium containing compound serving as the positive electrode active material may be various types of lithium containing compound, such as a lithium cobalt oxide, a lithium nickel oxide, Li_{1±α} Ni_{1/3}C_{1/3}Mn_{1/3}O_{2±δ ,} a lithium manganate, a spinel based lithium compound (a heterogenous element substituted Li-Mn spinel or the like having a composition expressed by Li₁₊ₓMn_{2-x-y}M_{y}O₄ (wherein M is one or more species selected from Al, Mg, Co, Fe, Ni, or Zn), a lithium titanate, a lithium metal phosphate (LiMPO₄ or the like, wherein M is one or more species selected from Fe, Mn, Co, or Ni). In particular, even higher advantageous effects can be expected in cases in which the positive electrode active material is a lithium containing oxide including configuration chemical elements of at least Li, at least one element out of Ni, Co, or Mn, and O. The positive electrode active material may be a single species employed alone, or may be two or more species employed in combination.

The shape of the positive electrode active material may be any shape normally employed as a positive electrode active material for a battery. The positive electrode active material may, for example, be in particle form. The positive electrode active material may have a solid core, may have a hollow core, may include a void, and may be porous. The positive electrode active material may be primary particles, and may be secondary particles resulting from aggregation of plural primary particles. A protective layer containing an ionically conductive oxide may be formed on the surface of the positive electrode active material. This thereby facilitates suppression of a reaction or the like between the positive electrode active material and a sulfide (for example, a sulfide solid electrolyte). Examples of the ionically conductive oxide include, for example, Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄, or the like.

The electrolyte including a positive electrode active material layer may be a solid electrolyte, may be a liquid electrolyte (electrolyte solution), or may be a combination thereof. In particular, further enhanced advantageous effects can be expected when the positive electrode active material layer includes at least a solid electrolyte as the electrolyte. A solid electrolyte listed under "Solid Electrolyte" above may be employed. A conductive auxiliary agent contained in the positive electrode active material layer may employ one of those listed under "Negative Electrode Layer" above. A resin contained in the positive electrode active material layer may employ one of those listed under "Resin" above.

The positive electrode current collector be any generally employed as a positive electrode current collector for a battery. Moreover, the positive electrode current collector may be in a foil form, a sheet form, a mesh form, a punched metal form, a foamed body, or the like. The positive electrode current collector may be configured by a metal foil or a metal mesh. In particular metal foils have excellent handling characteristics and the like. The positive electrode current collector may be configured from plural sheets of foil. Examples of a metal configuring the positive electrode current collector include Cu, Ni, Cr, Au, Pt, Ag, Al, Fe, Ti, Zn, Co, stainless steel, and the like. In particular, from a perspective such as securing oxidation resistance, the positive electrode current collector may include Al. The positive electrode current collector may include a coating layer of some sort on the surface thereof for an objective such as adjusting resistivity. Moreover, the positive electrode current collector may be formed by the above metal being plated or vapor deposited on a metal foil or on a substrate.

The electrolyte layer in the secondary battery of the present disclosure may be a layer that includes a solid electrolyte but does not include a liquid electrolyte (solid-state battery), may be a layer that includes a liquid electrolyte (non-aqueous electrolyte solution) but does not include a solid electrolyte, and may be a layer including both a solid electrolyte and a liquid electrolyte. In an embodiment of the secondary battery of the present disclosure, a lithium-ion secondary battery 1 illustrated in Fig. 1 includes a positive electrode layer 2 including a positive electrode current collector 5 and a positive electrode active material layer 6, a negative electrode layer 3 including a negative electrode current collector 7 and a negative electrode active material layer 8, and an electrolyte layer 4 interposed between the positive electrode layer 2 and the negative electrode layer 3. Note that when the electrolyte layer 4 contains a liquid electrolyte, the electrolyte layer 4 preferably includes a separator to insulate the positive electrode layer 2 from the negative electrode layer 3 while retaining the liquid electrolyte. Moreover, when the electrolyte layer 4 includes a solid electrolyte, the electrolyte layer 4 may include an arbitrary selected binder or the like in addition to the solid electrolyte. In particular, when a negative electrode active material and a negative electrode of the present disclosure are employed, the electrolyte layer 4 preferably includes a solid electrolyte but does not include a liquid electrolyte, or includes a liquid electrolyte and a solid electrolyte (solid-state battery).

The liquid electrolyte may employ, without limitation, any non-aqueous electrolyte solution normally employed in a non-aqueous lithium-ion secondary battery. Such a non-aqueous electrolyte solution may be a composition containing a supporting electrolyte in a non-aqueous solvent. The non-aqueous solvent may be a material selected from the group consisting of an organic electrolyte, a fluorous solvent, propylene carbonate (PC), ethylene carbonate (EC), diethyl carbonate (DEC), dimethyl carbonate (DMC), ethyl methyl carbonate (EMC), and a combination of two or more species thereof. Examples of the supporting electrolyte include a material selected from the group consisting of Li(FSO₂)₂N, LiPF₆, LiBF₄, LiClO₄, LiAsF₆, LiCF₃SO₃, LiC₄F₉SO₃, LiN(CF₃SO₂)₂, LiC(CF₃SO₂)₃, a LiI lithium compound (lithium salt), and a combination of two or more species thereof.

A separator employed in the liquid electrolyte may be any separator normally employed in a non-aqueous lithium-ion secondary battery and examples thereof include, for example, resins such as a polyethylene (PE), a polypropylene (PP), a polyester, and a polyamide. The separator may have a single layer structure, and may have a multilayer structure.

### Examples

Detailed description follows regarding the present disclosure by way of Examples, however the technical scope of the present disclosure is not limited by the following Examples.

### Example 1

### 1. Positive Electrode Layer Production

A styrene-butadiene rubber (SBR) binder at 0.4 % by weight, a conductive auxiliary agent (vapor-grown carbon fiber (VGCF)) at 2% by weight, an Li₂S-P₂S₅ based solid electrolyte at 12.6% by weight, and LiNi_{0.8}Co_{0.15}Mn_{0.05}O₂ serving as a positive electrode active material at 85% by weight were added to an organic solvent. Then an ultrasound homogenizer was employed for kneading and a positive electrode slurry obtained. The obtained positive electrode slurry was coated onto an Al foil, and a positive electrode layer was produced.

### 2. Negative Electrode Layer Production

A vinyl-based binder at 2% by weight was dissolved or dispersed in an organic solvent to prepare a binder solution. Si particles (average primary particle size: 1.5 µm) at 15% by weight was introduced into the binder solution and a slurry produced. The slurry obtained thereby was dried using a spray dry method, and granulated bodies were produced as a composite of the Si particles and resin. Next, the Li₂S-P₂S₅ based solid electrolyte having a specific particle size was added to an organic solvent, together with the granulated bodies, so as to achieve a proportion of 50% by weight with respect to the granulated bodies, and mixed by stirring. Following on therefrom, the solvent was removed, and pulverization was performed thereon using a mortar. A composite electrode active material having the solid electrolyte distributed on the surface of the granulated bodies was produced thereby. Next, the produced composite electrode active material at 58% by weight, an SBR binder at 2% by weight, a conductive auxiliary agent (carbon black) at 0.4% by weight, and a Li₂S-P₂S₅ based solid electrolyte at 49.6% by weight, were added at these proportions to a solvent. An ultrasound homogenizer was employed for kneading and a negative electrode slurry obtained. The obtained negative electrode slurry was coated on a Cu foil to produce a negative electrode layer. Note that for the particle sizes of the granulated bodies and the solid electrolyte, the D50 values were employed as measured by a laser diffraction analysis method. Note that in the present example the particle size of the granulated bodies was 1 µm, and the particle size of the Li₂S-P₂S₅ based solid electrolyte distributed on the surface of the granulated bodies was 1 µm. Namely, in the present example, a ratio of the particle size of the Li₂S-P₂S₅ based solid electrolyte to the particle size of the granulated bodies was 1.0.

### 3. Solid Electrolyte Layer Production

An acrylate-butadiene rubber (ABR) binder at 0.6% by weight and the Li₂S-P₂S₅ based solid electrolyte at 99.4% by weight were added into an organic solvent. Then an ultrasound homogenizer was employed for kneading and an electrolyte layer slurry obtained. The obtained electrolyte layer slurry was coated onto an Al foil and a solid electrolyte layer was produced.

### 4. Lithium-Ion Secondary Battery Production

Thin oblong shapes were formed of each of the positive electrode layer, the negative electrode layer, and the solid electrolyte layer that had been produced by 1. to 3. as described above. Next, the positive electrode layer and the solid electrolyte layer were stuck together with the faces to be laminated thereof facing each other, and then this was roll-pressed at a pressure of 50 kN/cm² at 165°C. Then the solid electrolyte layer was transferred to the positive electrode layer by peeling the Al foil off from the solid electrolyte layer. Moreover, a face to be laminated of the separate solid electrolyte layer was similarly stuck onto the face to be laminated of the negative electrode layer, and then this was roll-pressed at a pressure of 50 kN/cm² at 25°C. Next, the solid electrolyte layer was transferred to the negative electrode layer by peeling the Al foil off from the solid electrolyte layer.

The negative electrode layer onto which the solid electrolyte layer has been transferred was punched out with a punch at φ13.00 mm, and the positive electrode layer to which the solid electrolyte layer has been transferred was punched out with a punch at φ11.28 mm. Separately, the solid electrolyte layer punched out at φ13.00 mm was transferred to the negative electrode having the solid electrolyte layer transferred thereon using a uniaxial press. A battery was made by opposing the obtained negative electrode layer and positive electrode layer to each other. Finally, a current output tab was respectively attached to the positive electrode layer and the negative electrode layer, a vacuum sealer was employed for encapsulation in an aluminum laminate, and a lithium-ion secondary battery was produced by constraining at a pressure of 5 MPa.

### 5. Battery Resistance Evaluation

For the lithium-ion secondary battery (all solid-state battery) produced as described above, the voltage was adjusted to 3.7V, and the resistance value was computed from the fall in voltage after 5 seconds when discharged at a 5C rate. Note that the resistance value was normalized using a resistance value of a lithium-ion secondary battery produced in a Comparative Example 1, described later, as 100.

### Example 2

In the present example, a lithium-ion secondary battery was produced similarly to that of Example 1, except in that the particle size of the granulated bodies was 5 µm, and the particle size of the Li₂S-P₂S₅ based solid electrolyte distributed on the surface of the granulated bodies was 1 µm. Namely, in Example 2, a ratio of the particle size of the Li₂S-P₂S₅ based solid electrolyte with respect to the particle size of the granulated bodies was 0.2.

### Example 3

In the present example, a lithium-ion secondary battery was produced similarly to in Example 1 except in that the particle size of the granulated bodies was 10 µm, and the particle size of the Li₂S-P₂S₅ based solid electrolyte distributed on the surface of the granulated bodies was 1 µm. Namely, in Example 3, the ratio of the particle size of the Li₂S-P₂S₅ based solid electrolyte with respect to the particle size of the granulated bodies was 0.1.

### Example 4

In the present example, a lithium-ion secondary battery was produced similarly to in Example 1 except in that the particle size of the granulated bodies was 15 µm, and the particle size of the Li₂S-P₂S₅ based solid electrolyte distributed on the surface of the granulated bodies was 0.6 µm. Namely, in Example 4, the ratio of the particle size of the Li₂S-P₂S₅ based solid electrolyte with respect to the particle size of the granulated bodies was 0.04.

### Example 5

In the present example, a lithium-ion secondary battery was produced similarly to in Example 1 except in that the particle size of the granulated bodies was 15 µm, and the particle size of the Li₂S-P₂S₅ based solid electrolyte distributed on the surface of the granulated bodies was 0.3 µm. Namely, in Example 5 the ratio of the particle size of the Li₂S-P₂S₅ based solid electrolyte with respect to the particle size of the granulated bodies was 0.02.

### Example 6

In the present example, a lithium-ion secondary battery was produced similarly to in Example 1 except in that the particle size of the granulated bodies was 25 µm, and the particle size of the Li₂S-P₂S₅ based solid electrolyte distributed on the surface of the granulated bodies was 1 µm. Namely, in Example 6, the ratio of the particle size of the Li₂S-P₂S₅ based solid electrolyte with respect to the particle size of the granulated bodies was 0.04.

### Comparative Example 1

In the present Comparative Example, a lithium-ion secondary battery was produced similarly to in Example 1 except in that granulated bodies having a particle size of 15 µm were employed as the negative electrode active material. Namely, in the Comparative Example 1, a lithium-ion secondary battery was produced using a negative electrode active material not including Li₂S-P₂S₅ based solid electrolyte on a surface of the granulated bodies.

### Results

Results of the resistance valuea measured for the lithium-ion secondary batteries produced in the Example 1 to Example 5 and the Comparative Example 1 are listed in Table 1. Note that, as stated above, the resistance values are indicated as values normalized by taking the resistance value of the lithium-ion secondary battery of Comparative Example 1 as 100.

**Table 1**

| | Particle Size Ratio (Solid Electrolyte/ Granulated Body) | Battery Resistance |
|---|---|---|
| Comparative Example 1 | - | 100 |
| Example 1 | 1 | 99 |
| Example 2 | 0.2 | 97 |
| Example 3 | 0.1 | 97 |
| Example 4 | 0.04 | 96 |
| Example 5 | 0.02 | 96 |
| Example 6 | 0.04 | 97 |

As illustrated in Table 1, it is apparent that the internal resistance in a secondary battery can be reduced by employing, as a negative electrode active material, a composite electrode active material having a solid electrolyte distributed on the surface of granulated bodies containing granulated bodies that include Si particles and a resin. In particular, it is apparent that as the particle size of the solid electrolyte distributed on the surface gets smaller relative to the particle size of the granulated bodies, the advantageous effect of reducing the resistance value is enhanced. In particular, it is apparent from a comparison of Example 4 and Example 6 that even for the same particle size ratio (solid electrolyte/(granulated body), the advantageous effect of reducing the resistance value is enhanced when the particle size of the solid electrolyte distributed on the surface is smaller.

## Claims

1. A composite electrode active material, comprising:
granulated bodies that comprise a resin and primary particles comprising a silicon element; and
a solid electrolyte distributed on a surface of the granulated bodies.

2. The composite electrode active material of claim 1, wherein a ratio of a particle size of the solid electrolyte with respect to a particle size of the granulated bodies is not greater than 1.0.

3. The composite electrode active material of claim 1, wherein a ratio of a particle size of the solid electrolyte with respect to a particle size of the granulated bodies is not greater than 0.4.

4. The composite electrode active material of claim 1, wherein a ratio of a particle size of the solid electrolyte with respect to a particle size of the granulated bodies is not greater than 0.05.

5. The composite electrode active material of any one of claims 1 to 4, wherein the solid electrolyte is a sulfide solid electrolyte.

6. A negative electrode layer, comprising:
a negative electrode current collector; and
a negative electrode active material layer comprising the composite electrode active material of any one of claims 1 to 5 arranged on one or both faces of the negative electrode current collector.

7. The negative electrode layer of claim 6, wherein the negative electrode active material layer further comprises a solid electrolyte.

8. The negative electrode layer of claim 6 or 7, wherein the negative electrode active material layer further comprises a conductive auxiliary agent.

9. A secondary battery, comprising:
the negative electrode layer (3) of any of claims 6 to 8;
a positive electrode layer (2) that comprises a positive electrode current collector and a positive electrode active material layer, comprising a positive electrode active material, arranged on one or both faces of the positive electrode current collector; and
an electrolyte layer (4) arranged between the negative electrode layer and the positive electrode layer.

10. The secondary battery of claim 9, wherein the electrolyte layer (4) comprises a separator that insulates the negative electrode layer (3) from the positive electrode layer (2), and a non-aqueous electrolyte solution.

11. The secondary battery of claim 9 or 10, wherein the negative electrode layer (3) further comprises a solid electrolyte in the negative electrode active material layer (8).

12. The secondary battery of any one of claims 9 to 11, wherein the negative electrode layer (3) further comprises a conductive auxiliary agent in the negative electrode active material layer (8).

13. A solid-state battery, comprising the secondary battery of any one of claims 9 to 12, wherein the electrolyte layer comprises a solid electrolyte.
